(19) Europäisches Patentamt
European Patent Office
Office européen des brevets

(11) **EP 4 585 357 A1**

(12) **EUROPEAN PATENT APPLICATION**
published in accordance with Art. 153(4) EPC

(43) Date of publication:
**16.07.2025 Bulletin 2025/29**

(21) Application number: 23900234.8

(22) Date of filing: **04.08.2023**

(51) International Patent Classification (IPC):
**B23K 26/38** $^{(2014.01)}$   **B21B 15/00** $^{(2006.01)}$
**B23K 26/03** $^{(2006.01)}$   **B23K 26/042** $^{(2014.01)}$

(52) Cooperative Patent Classification (CPC):
**B21B 15/00; B23K 26/03; B23K 26/042; B23K 26/38**

(86) International application number:
**PCT/JP2023/028626**

(87) International publication number:
**WO 2024/122106 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.12.2022 JP 2022197508**

(71) Applicant: **JFE Steel Corporation
Tokyo 100-0011 (JP)**

(72) Inventors:
• **FUKUNAGA Takayuki
Tokyo 100-0011 (JP)**
• **HARAZONO Manabu
Tokyo 100-0011 (JP)**

(74) Representative: **Scott, Stephen John
YUJA IP LAW
4 Centenary House
The Avenue
York YO30 6AU (GB)**

(54) **LASER CUTTING METHOD, STEEL STRIP PRODUCTION METHOD, LASER CUTTING APPARATUS, AND STEEL STRIP PRODUCTION EQUIPMENT**

(57)     A laser cutting method is for cutting, using a laser cutter, the vicinity of a joint (2) at which a trailing end of a preceding steel strip (1A) is joined to a leading end of a succeeding steel strip (1B), and includes an edge position detection process of detecting an edge position of the preceding steel strip and of the succeeding steel strip, a cutting track determination process, and a cutting execution process. In the cutting track, an oscillation start position of a laser is set outward from the edge position by a first predetermined distance in a width direction of the steel strip, an oscillation end position of the laser is set outward from the edge position by a second predetermined distance in the width direction of the steel strip, and a penetration angle of the laser is set to a predetermined angle or less.

*FIG. 1*

EP 4 585 357 A1

**Description**

TECHNICAL FIELD

The present disclosure relates to a laser cutting method, a method of producing a steel strip, a laser cutter, and steel strip production equipment.

BACKGROUND

In the cold rolling process of a steel strip, it is common practice to join the trailing end of the preceding material (preceding steel strip) and the leading end of the succeeding material (succeeding steel strip) and continuously feed the material to a cold rolling line in order to improve productivity or yield. This enables rolling with tension applied over the entire length of the steel strip and highly accurate control of strip thickness and shape, even at the leading end and trailing end of the steel strip.

At the end of the joint (welded portion) between the preceding material and succeeding material in the sheet transverse direction, a width step is inevitably formed due to the difference in steel strip width, the difference in steel strip thickness, positional misalignment, and the like between the preceding material and succeeding material. Therefore, if rolling is performed in this condition, stress concentration may occur at the width step, leading to fracture at the joint. If fracture occurs at the joint, the cold rolling line must be stopped, reducing productivity, and work rolls damaged by fractured pieces must be replaced, resulting in increased production costs. A steel strip may also have defective portions that arise during the production process, and rolling of the defective portions may be omitted, or the defective portions may be removed manually. Either approach will lead to line stoppages and reduced productivity.

Therefore, to prevent fracture at the joint, notching is performed to form a notch at the end of the joint in the sheet transverse direction for the purpose of relieving stress concentration in the vicinity of the joint. In the process of cold rolling the steel strip, the rolling is performed after notching. Similarly, when defective portions are removed, rolling is performed after the notching. Here, the device that forms the notch is sometimes referred to as a notcher.

A common method of notching is, for example, to perform mechanical shearing to yield a semicircular shape with no corners, as disclosed in Patent Literature (PTL) 1. This semicircular notch has a uniform curvature of the outer edge, and the width of the steel strip is smallest at the joint. The maximum stress thus occurs at the joint.

However, due to sheet metal thinning of the cold-rolled steel strip and high alloying in recent years, mechanically sheared sections may become a cause of fracture during rolling. Methods using laser cutting are disclosed in PTL 2 and 3 as a response to this problem.

CITATION LIST

Patent Literature

PTL 1: JP H05-076911 A

PTL 2: JP 2017-080803 A

PTL 3: JP 2017-080806 A

SUMMARY

(Technical Problem)

The techniques in PTL 2 and 3 allow cold rolling of brittle material or highly alloyed material, such as silicon steel sheets or high tensile strength steel sheets with high Si and Mn content, without causing joint fracture. However, the user must set the cutting start position and cutting end position and perform the cutting operation.

It is an aim of the present disclosure, conceived in light of these circumstances, to provide a laser cutting method, a method of producing a steel strip, a laser cutter, and steel strip production equipment that enable automatic cutting of the joint between steel strips.

(Solution to Problem)

To achieve the aforementioned aim, it is necessary to identify the widthwise positions (edge positions) of the preceding steel strip and succeeding steel strip, regardless of whether the preceding steel strip and succeeding steel strip are of the same width or different widths, to identify the proper cutting track for laser cutting, and to perform the cutting. As a result of diligent study, we discovered a cutting method that achieves good cutting of the joint ends of steel strips.

(1) A laser cutting method according to an embodiment of the present disclosure is

a laser cutting method of cutting, using a laser cutter, a vicinity of a joint at which a trailing end of a preceding steel strip is joined to a leading end of a succeeding steel strip, the laser cutting method including:
an edge position detection process of detecting an edge position of the preceding steel strip and of the succeeding steel strip;
a cutting track determination process of determining a cutting track based on the edge position; and
a cutting execution process of executing laser cutting along the cutting track, wherein
in the cutting track, an oscillation start position of a laser is set outward from the edge position by a first predetermined distance in a width direction of the steel strip, an oscillation end position of the laser is set outward from the edge position by a second predetermined distance in the width direction of the steel strip, and a penetration angle of the laser is set to a predetermined angle or less.

(2) As an embodiment of the present disclosure, in (1),
the oscillation start position of the laser and the oscillation end position of the laser are set on the cutting track.
(3) As an embodiment of the present disclosure, in (1) or (2),
the cutting track is set to an arc-shape or a triangular shape.
(4) As an embodiment of the present disclosure, in (3),
the cutting track is set to the triangular shape in a case in which a difference in width between the preceding steel strip and the succeeding steel strip exceeds a predetermined width.
(5) As an embodiment of the present disclosure, in any one of (1) to (4),

in a portion of the cutting track in the cutting execution process, tracking control is performed to keep a separation distance between a laser head of the laser cutter and the steel strip constant, and
a start position of the tracking control is set on the cutting track inward from the edge position by a third predetermined distance, and an end position of the tracking control is set on the cutting track inward from the edge position by a fourth predetermined distance.

(6) As an embodiment of the present disclosure, in any one of (1) to (5),
the cutting track determination process includes

a cutting track calculation process of calculating the cutting track based on the edge position,
a misalignment detection process of detecting misalignment of the edge position, and
a cutting track correction process of correcting the cutting track based on the detected misalignment.

(7) A method of producing a steel strip according to an embodiment of the present disclosure includes
producing a steel strip by cutting, using a laser cutter, the vicinity of the joint according to the laser cutting method of any one of (1) to (6).
(8) A laser cutter according to an embodiment of the present disclosure is

a laser cutter for cutting a vicinity of a joint at which a trailing end of a preceding steel strip is joined to a leading end of a succeeding steel strip, wherein
the laser cutter is controlled by a control unit comprising an edge position detection unit configured to detect an edge position of the preceding steel strip and of the succeeding steel strip, a cutting track determination unit configured to determine a cutting track based on the edge position, and a cutting execution unit configured to execute laser cutting along the cutting track, and
in the cutting track, an oscillation start position of a laser is set outward from the edge position by a first predetermined distance in a width direction of the steel strip, an oscillation end position of the laser is set outward from the edge position by a second predetermined distance in the width direction of the steel strip, and a penetration angle of the laser is set to a predetermined angle or less.

(9) Steel strip production equipment according to an embodiment of the present disclosure includes the laser cutter of (8), wherein the steel strip production equipment produces a steel strip by cutting, using the laser cutter, the vicinity of the joint.

(Advantageous Effect)

According to the present disclosure, a laser cutting method, a method of producing a steel strip, a laser cutter, and steel strip production equipment that enable automatic cutting of the joint between steel strips can be provided.

BRIEF DESCRIPTION OF THE DRAWINGS

In the accompanying drawings:

FIG. 1 is a plan view illustrating the area around the joint and the arc-shaped cutting track of a preceding steel strip and a succeeding steel strip;
FIG. 2 is a partially enlarged view of FIG. 1;
FIG. 3 is a plan view illustrating the area around the joint and the triangular cutting track of a preceding steel strip and a succeeding steel strip;
FIG. 4 is a diagram illustrating the flow of laser cutting of the joint between the preceding steel strip and the succeeding steel strip after the cutting track is determined;
FIG. 5 is a diagram illustrating an example configuration of steel strip cutting equipment including a laser cutter according to an embodiment of the present disclosure; and
FIG. 6 is a diagram illustrating the flow for correcting the cutting track.

DETAILED DESCRIPTION

When laser cutting the joint (welded portion) of the preceding steel strip and succeeding steel strip, it is necessary to determine the cutting track. To determine the cutting track, the angle of penetration of the laser into the end of the steel strip must be considered. Here, the end refers to the end of the steel strip in the sheet transverse direction. If the penetration angle exceeds a certain angle, areas of low stress distribution will occur at the edge of the steel strip. Such areas will reduce the sheet passing performance and may cause scratches on the sheet passing rollers. The cutting track must also be determined so as not to give rise to incomplete cutting, especially at the end of the steel strip.

A laser cutting method, a method of producing a steel strip, a laser cutter, and steel strip production equipment according to embodiments of the present disclosure are described below with reference to the drawings.

(First Embodiment)

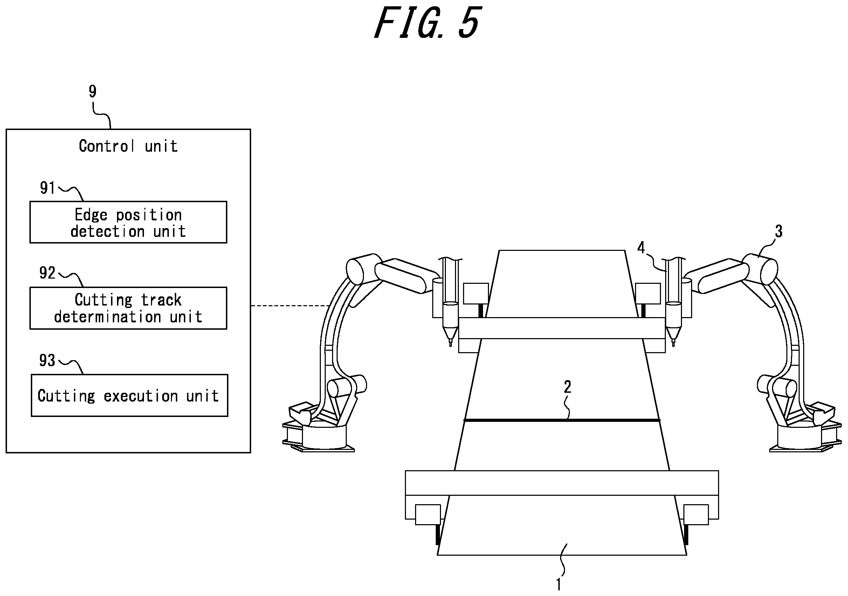

FIG. 5 is a diagram illustrating an example configuration of cutting equipment for a steel strip 1, including a laser cutter 4 according to a first embodiment. Hereafter, the conveyance direction of the steel strip 1 is also referred to as the travel direction.

As illustrated in FIG. 5, a steel strip 1 having a joint 2, at which the trailing end of the preceding steel strip is joined to the leading end of the succeeding steel strip, is brought into the cutting equipment for the steel strip 1. The cutting equipment for the steel strip 1 is provided with a laser cutter 4 that uses a laser to cut the vicinity of the joint 2. The cutting equipment for the steel strip 1 may be provided with a joint detection device to detect the joint 2. The cutting equipment for the steel strip 1 may also be provided with an edge detection device to detect the edge of the steel strip 1.

In the present embodiment, the cutting equipment for the steel strip 1 is provided with a robot arm 3 having a laser cutter 4 attached to its tip. The robot arm 3 is controlled by a control unit 9, such as a computer or cutting equipment console, to execute laser cutting, such as notching. In the present embodiment, a pair of laser cutters 4 attached to robot arms 3 are installed at both edges with the steel strip 1 therebetween. There may be more than one laser cutter 4, as in the present embodiment, or only one. In the present embodiment, the robot arm 3 is multi-axis. Therefore, the position of the laser cutter 4 can be freely controlled to set an unrestricted cutting track, thus enabling, for example, laser cutting in an arc-shape or triangular shape. Here, a triangular cutting track means that the track is like a triangle, but runs along two sides of the triangle, without including one side of the triangle.

The control unit 9 includes an edge position detection unit 91 to perform control related to an edge position detection process, a cutting track determination unit 92 to perform control related to a cutting track determination process, and a cutting execution unit 93 to perform control related to a cutting execution process. Details of the edge position detection process, cutting track determination process, and cutting execution process are described below. The control unit 9 may have a software configuration. In other words, once a program is read by the processor of the control unit 9, the processor may function as the edge position detection unit 91, the cutting track determination unit 92, and the cutting execution unit 93. The program may be stored in a storage device, such as memory, accessible from the control unit 9.

The joint detection device may, for example, be installed above the steel strip 1 (upward in the height direction). The joint detection device detects features such as unevenness on the surface of the steel strip 1. The joint detection device may, for example, be a camera that takes pictures of the surface of the steel strip 1 but is not limited to any particular device. The control unit 9 may, for example, determine the joint 2 based on images from the joint detection device, ascertain the cutting range, and set the cutting track.

Edge detection devices may be provided upstream and downstream of the laser cutter 4. The edge detection device detects the respective edges (positions of the ends in the width direction) of the preceding steel strip and succeeding steel strip with the joint 2 therebetween. The edge detection device may, for example, be configured to include a laser sensor that detects the position based on the reflection of a laser, but the edge detection device is not limited to any particular device. The control unit 9 may, for example, set the cutting track by ascertaining the respective edges of the preceding steel strip and the succeeding steel strip based on a detection signal from the edge detection device.

The cutting equipment for the steel strip 1 may, for example, form part of cold rolling equipment. In addition to the aforementioned cutting equipment for the steel strip 1, the cold rolling equipment is provided with at least a cold mill for cold rolling the steel strip 1. The cold mill is installed downstream from the cutting equipment for the steel strip 1 and cold rolls the notched steel strip 1. The cold rolling equipment may also form part of equipment for producing a steel strip. In other words, the laser cutter 4 may form part of steel strip production equipment. The laser cutting method performed with the laser cutter 4 may also form part of a method of producing a steel strip. The steel strip production equipment may be further provided with equipment for cutting the steel strip 1, for example located downstream from the cold mill, to cut out steel strips of a desired size.

Here, conventionally, the cutting start position and cutting end position are determined by the user, and the start position and end position of tracking control for cutting are defined inside the steel strip 1. Laser cutting was then executed along the cutting track from the cutting start position to the cutting end position. In the laser cutting method according to the present embodiment, as described below, the appropriate cutting start position and cutting end position can be calculated and determined as the cutting track without user intervention. This enables automatic cutting of the joint 2.

In the present embodiment as well, tracking control is performed. The tracking control needs to be performed inside the steel strip 1, i.e., at a position where the steel strip 1 is definitely present, to avoid abnormal detection of the tip. For example, the height of the laser cutter 4 is first adjusted by the robot arm 3, and upon reaching the start position of the tracking control, the steel strip 1 is detected by a steel strip detection function of the laser cutter 4. Based on the detection signal from detection of the steel strip 1, the height is determined by a function of the laser cutter 4 to maintain a constant distance between the tip and the steel strip 1.

The laser cutting method according to the present embodiment is performed by the cutting equipment for the steel strip 1 with the aforementioned configuration. The laser cutting method includes an edge position detection process of detecting an edge position of the preceding steel strip and of the succeeding steel strip, a cutting track determination process of determining a cutting track based on the edge position, and a cutting execution process of executing laser cutting along the cutting track. In the cutting track, an oscillation start position and an oscillation end position of a laser are set outward from the edge position by a first predetermined distance and a second predetermined distance, respectively, in the width direction of the steel strip, and the penetration angle of the laser is set to a predetermined angle or less. The details of each process are described below with reference to the drawings.

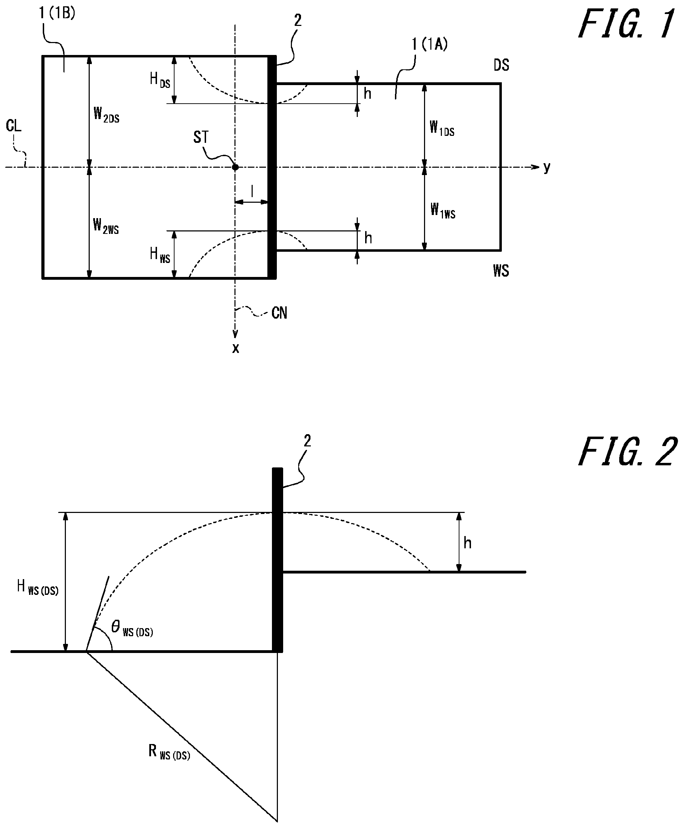

FIG. 1 is a plan view illustrating the area around the joint 2 and the arc-shaped cutting track of a preceding steel strip 1A and a succeeding steel strip 1B. CL is the line center, which indicates the center in the width direction of the line equipment that transports the steel strip 1. CN is the notcher center, which indicates the center of the notcher in the line travel direction (longitudinal direction). ST is a reference position at the intersection of the line center and the notcher center. The y-axis is illustrated as parallel to the line center (CL). The x-axis is illustrated as parallel to the notcher center (CN). One side of the steel strip 1 in the width direction is referred to as the workpiece side (WS) and the other side as the drive side (DS). Hereafter, the subscripts WS or DS are used to indicate whether the parameter is for the workpiece side or the drive side.

In the edge position detection process, the workpiece side edge and the drive side edge are detected for each of the preceding steel strip 1A and succeeding steel strip 1B. In the example in FIG. 1, for the preceding steel strip 1A, the distance from the line center (CL) to the edge on the workpiece side (WS) is $W_{1ws}$, and the distance from the line center (CL) to the edge on the drive side (DS) is $W_{1DS}$. The width of the preceding steel strip 1A is calculated as $W_{1WS} + W_{1DS}$. For the succeeding steel strip 1B, the distance from the line center (CL) to the edge on the workpiece side (WS) is $W_{1WS}$, and the distance from the line center (CL) to the edge on the drive side (DS) is $W_{2DS}$. The width of the succeeding steel strip 1B is calculated as $W_{2WS} + W_{2DS}$. In comparing the width of the preceding steel strip 1A with the width of the succeeding steel strip 1B, the wider width is sometimes referred to as the "wide side" and the narrower width as the "narrow side" in the following explanation. In the example in FIG. 1, the succeeding steel strip 1B is the wide side, and the preceding steel strip 1A is the narrow side.

For example, as illustrated in FIG. 1, the cutting track determined in the cutting track determination process may be circular. The cutting track is indicated by a dashed line. In a case in which the cutting track is circular, the cutting radius is determined. FIG. 2 is a partially enlarged view of a portion of the cutting track in FIG. 1. In the cutting track determination process, the cutting radius ($R_{WS}$, $R_{DS}$) is determined based on the cutting depth ($H_{WS}$, $H_{DS}$) on the wide side. The notation $R_{WS(DS)}$ in FIG. 2 summarizes the cutting radius ($R_{WS}$) on the workpiece side (WS) and the cutting radius ($R_{DS}$) on the drive side (DS). The same applies to $H_{WS(DS)}$ and $\theta_{WS(DS)}$ in FIG. 2, and this notation may be used in the following explanation.

The cutting radius $R_{WS(DS)}$ is calculated from the following Equation (1). The required penetration angle $\theta_{WS(DS)}$ is set, and the cutting radius $R_{WS(DS)}$ is determined based on the set penetration angle $\theta_{WS(DS)}$. As illustrated in FIG. 2, the penetration angle $\theta_{WS(DS)}$ is defined as an angle relative to the edge on the wide side.

[Math. 1]

$$R_{WS(DS)} = \frac{H_{WS(DS)}}{1 - \sin^{-1}(90° - \theta_{WS(DS)})} \quad \cdots \quad \text{Equation (1)}$$

Here, the units of the penetration angle ($\theta_{WS}$, $\theta_{DS}$) are (°). The units for cutting depth ($H_{WS}$, $H_{DS}$) and cutting radius ($R_{WS}$, $R_{DS}$) are, for example, mm. Through experiment, we discovered that the sheet passing property of the steel strip 1 can be prevented from deteriorating by setting the penetration angle $\theta_{WS(DS)}$ to a predetermined angle or less, thus preventing scratching of the sheet passing rollers. The predetermined angle is an angle that prevents the corners (edges) of the cut portion from becoming tension-free and can provide the necessary tension. As described in the Examples below, the predetermined angle is, for example, 40°. The predetermined angle is preferably 30° or less to ensure that the tension distribution at the corner of the steel strip edge after cutting is about half of the set tension.

In addition, $R_{WS}$ and $R_{DS}$ need not be the same value. However, a large difference in the cutting range between the workpiece side (WS) and drive side (DS) of the steel strip 1 may reduce the sheet passing property or rollability. Therefore, it is preferable that the cutting ranges on the workpiece side (WS) and drive side (DS) be generally the same, and therefore, $R_{WS}$ and $R_{DS}$ are preferably the same value. When $R_{WS}$ and $R_{DS}$ are the same value, the cutting radius can be determined based on the larger value of $H_{WS}$ and $H_{DS}$ to reduce the penetration angle on both the workpiece side (WS) and drive side (DS). Here, in FIG. 1 and FIG. 2, h indicates the cutting depth on the narrow side. Also, 1 indicates the distance in the longitudinal direction from the notcher center (CN) to the joint 2.

The cutting track may be set to an arc-shape or a triangular shape. Although an arc-shaped cutting track was described above, a triangular cutting track is described below.

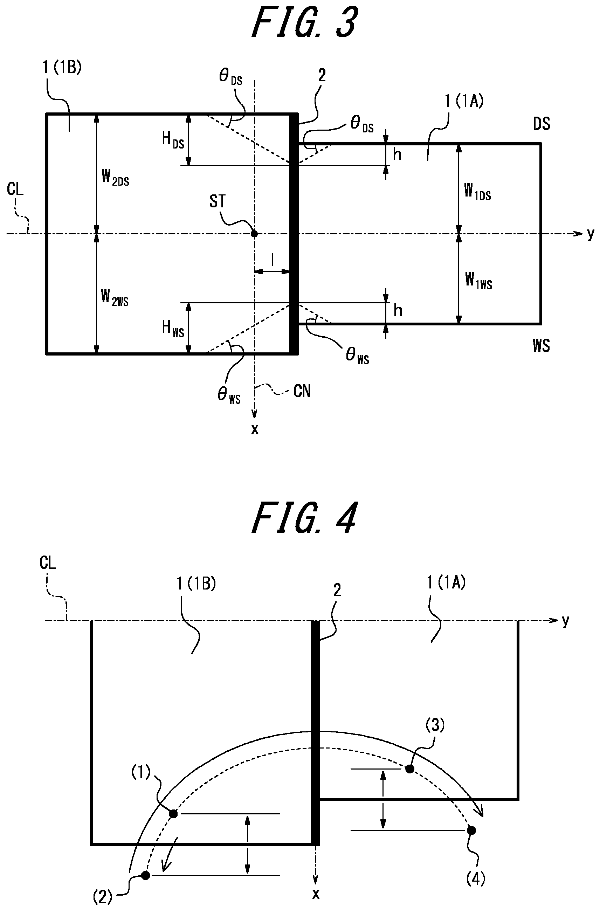

An arc-shaped cutting track is preferred, because the cutting area can be smaller and the shape has no corners (i.e., is rounded). However, when the difference in width between the preceding steel strip 1A and the succeeding steel strip 1B is large, an arc-shaped cutting track may result in a larger cutting range and longer cutting time, which may lower the yield rate. Therefore, the cutting track is preferably set to a triangular shape in a case in which a difference in width between the preceding steel strip 1A and the succeeding steel strip 1B exceeds a predetermined width. This is because a triangular cutting track can further narrow the cutting range and shorten the cutting time as compared to an arc-shaped cutting track. The predetermined width may, for example, be based on the upper limit of the size of the cutting range or the upper limit of the cutting time required by the notching operation. FIG. 3 is a plan view illustrating the area around the joint 2 and the triangular cutting track of the preceding steel strip 1A and the succeeding steel strip 1B. The reference signs illustrated in FIG. 3 are the same as in FIG. 1.

In the cutting track determination process, the arc-shape or triangular shape of the cutting track is further preferably switched automatically based on the result of comparing the difference in width between the preceding steel strip 1A and the succeeding steel strip 1B to the predetermined width.

After the cutting track is determined as described above, laser cutting is performed along the determined cutting track in the cutting execution process. FIG. 4 is a diagram illustrating the flow of laser cutting of the joint 2 between the preceding steel strip 1A and the succeeding steel strip 1B. The cutting track is also indicated in FIG. 4 by a dashed line. As described above, the laser penetration angle is set to a predetermined angle or less in the cutting track.

In executing laser cutting, it is necessary to set the cutting start position (oscillation start position of the laser) for starting the cutting operation and the cutting end position (oscillation end position of the laser) for ending the cutting operation on the steel strip 1. The oscillation start position of the laser and the oscillation end position of the laser are set on the cutting track. The cutting start position and the cutting end position are set at the end face of the steel strip 1, for example, to minimize the length of the cutting track and reduce the cutting time. However, if there is an error in measurement of the end face of the steel strip 1 or an error in operation of the laser cutter 4 occurs, cutting defects such as incomplete cutting will occur.

Therefore, to prevent the occurrence of cutting defects, the oscillation start position of the laser is set outward from the edge position by a first predetermined distance in the width direction of the steel strip 1. The oscillation end position of the laser is similarly set outward from the edge position by a second predetermined distance in the width direction of the steel strip 1. The first predetermined distance and the second predetermined distance may, for example, be set based on the operating constraints of the laser cutter 4 (such as the time required until operation becomes stable). As specific examples, the first predetermined distance and the second predetermined distance may be values between 1.0 mm and 20.0 mm. The second predetermined distance may be the same as or different from the first predetermined distance.

In a portion of the cutting track in the cutting execution process, tracking control is performed to keep the separation distance between a laser head of the laser cutter 4 and the steel strip constant 1. As described above, the tracking control needs to be performed inside the steel strip 1, i.e., at a position where the steel strip 1 is definitely present, to prevent the tip of the laser cutter 4, for example, from contacting or damaging the steel strip 1. Therefore, the start position of the tracking control is set on the cutting track inward from the edge position by a third predetermined distance. The end position of the tracking control is similarly set on the cutting track inward from the edge position by a fourth predetermined distance. The third predetermined distance and the fourth predetermined distance may, for example, be set based on the accuracy with which the laser cutter 4 detects the steel strip 1, operating constraints of the laser cutter 4, or the like. As specific examples, the third predetermined distance and the fourth predetermined distance may be values between 1.0 mm and 10.0 mm. The fourth predetermined distance may be the same as or different from the third predetermined distance.

Here, it is not necessary for the oscillation start position of the laser or the oscillation end position of the laser to match on the workpiece side (WS) and drive side (DS) of the steel strip 1.

In the cutting execution process, the laser head of the laser cutter 4 may move in the order indicated by the arrows connecting (1) to (4) in FIG. 4. First, the lead end (laser head) of the laser cutter 4 operates at a position several millimeters above the surface of the steel strip 1 at the start of the tracking control position ((1) in FIG. 4). Once the tracking control is executed to determine the tracking height, the tracking control is temporarily deactivated to maintain the lead end height. While the height of the lead end of the laser cutter 4 is maintained, the laser is moved to the position where the laser oscillation starts ((2) in FIG. 4), and the laser is oscillated to start cutting along the cutting track. Upon the lead end of the laser cutter 4 reaching the tracking control start position ((1) in FIG. 4), the tracking control is again executed to continue cutting along the cutting track. Upon the lead end of the laser cutter 4 reaching the tracking control end position ((3) in FIG. 4), the laser cutter 4 device is moved along the cutting track while the tracking control is deactivated. Upon the lead end of the laser cutter 4 reaching the oscillation end position of the laser ((4) in FIG. 4), laser oscillation is stopped, and cutting is complete. Here, in the example in FIG. 4, it is assumed that the cutting track is arc-shaped, but the same applies to the case in which the cutting track is triangular.

The effects of the present disclosure will be described in detail below based on examples (experimental examples), but the subject matter of the present disclosure is not limited to the examples.

EXAMPLES

Laser cutting in the vicinity of the joint 2 was performed under the set of conditions illustrated in Table 1 using blank sheets for electrical steel sheets containing 3.0 wt% Si with a base metal thickness of 2.0 mm and a sheet width of 1200 mm, and 3.0 wt% Si with a base metal thickness of 2.0 mm and a sheet width of 1000 mm. Here, the cutting time is the time taken when cutting at a nearly constant cutting speed of 3 mpm. The unit tension ratio is the ratio (%) of the tension per unit area acting on the steel strip 1 to the set tension per unit area (unit tension setting). The unit tension ratio is evaluated by calculating the minimum value (min) of the aforementioned ratio for the tension acting around the cut portion after cutting. In particular, the smaller this minimum unit tension ratio is, the more it becomes an indicator of a greater tendency to droop and a deterioration in the sheet passing property of the steel sheet.

[Table 1]

[Table 1]

| No. | Cutting start position | Cutting end position | Cutting radius [mm] | Cutting track | Penetration angle θ[°] | Unit tension Ratio (min) | Incomplete cutting | Cutting time [s] | Notes |
|---|---|---|---|---|---|---|---|---|---|
| 1 | outward from edge | outward from edge | 745 | arc-shaped | 30 | 41% | no | 16.4 | Example |
| 2 | outward from edge | outward from edge | 427 | arc-shaped | 40 | 38 % | no | 12.2 | Example |
| 3 | outward from edge | outward from edge | 407 | arc-shaped | 41 | 30% | no | 11.9 | Comparative example |
| 4 | outward from edge | outward from edge | - | triangular | 30 | 44 % | no | 6.4 | Example |
| 5 | edge | edge | 745 | arc-shaped | 30 | 41 % | yes | 15.6 | Comparative example |
| 6 | edge | edge | - | triangular | 30 | 44 % | yes | 5.6 | Comparative example |
| 7 | outward from edge | outward from edge | 6600 | arc-shaped | 10 | 85 % | no | 48.7 | Example |
| 8 | outward from edge | outward from edge | 1650 | arc-shaped | 20 | 62 % | no | 33.8 | Example |
| 9 | outward from edge | outward from edge | 554 | arc-shaped | 35 | 39 % | no | 14 | Example |
| 10 | outward from edge | outward from edge | 342 | arc-shaped | 45 | 25 % | no | 10.8 | Comparative example |

As is clear from the examples in Table 1, the method described in the above embodiment enables cutting of the joint 2 without any incomplete cutting. Here, the reason why numbers 3 and 10, which have no incomplete cutting, are judged as Comparative Examples in the notes of Table 1 is that a comprehensive judgment is made in consideration of the effect on operation based on the penetration angle θ. This is because the minimum unit tension ratio is 30 % or less when the penetration angle 0 is greater than 40°, making scratches on the roller more likely to occur.

(Second Embodiment)

A laser cutting method according to a second embodiment is described below. The configuration of the steel strip 1 cutting equipment that executes the laser cutting method is the same as in the first embodiment, except that the laser cutter 4 is provided with a two-dimensional detection device. To avoid duplicate explanation, the configuration and processes that differ from the first embodiment are described below.

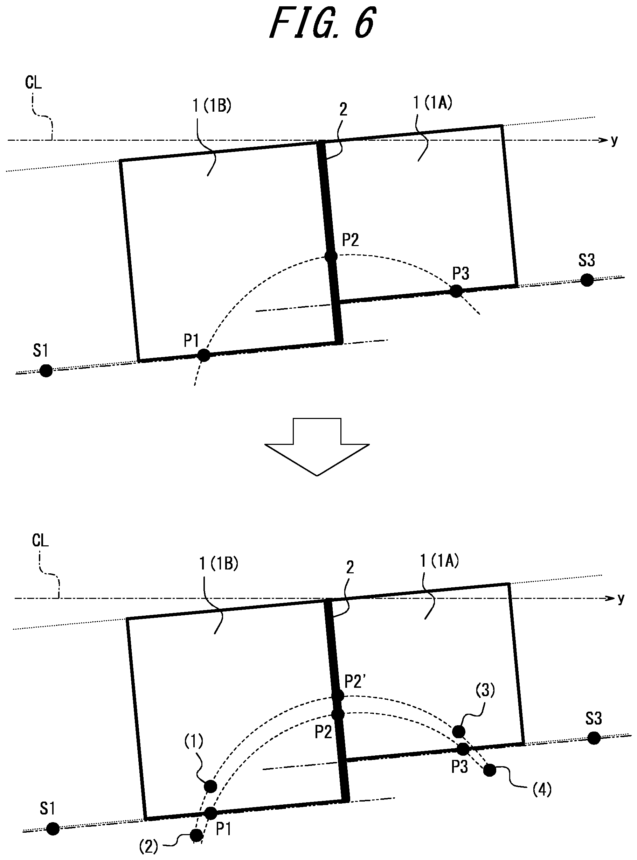

The laser cutting method according to the first embodiment can properly cut the joint 2, as described above. However, in a case in which the steel strip 1 is skewed (inclined with respect to the conveyance direction) with respect to the laser cutter 4, the detected edge position and the edge position in the area for laser cutting may become misaligned. For example, in a case in which edge detection devices that detect the edge positions are installed upstream and downstream of the laser cutter 4, the edge positions detected by the edge detection devices (S3 and S1 in FIG. 6) and the edge positions in the area for laser cutting (P3 and P1 in FIG. 6) are misaligned in the width direction. If the misalignment becomes large, the lead end of the laser cutter 4 may, for example, come into contact with the steel strip 1. Therefore, the laser cutting method according to the present embodiment identifies the magnitude of the positional deviation in a case in which the steel strip 1 is skewed, and corrects the cutting track, the oscillation start position of the laser, the tracking control start position, the tracking control end position, and the oscillation end position of the laser.

As mentioned above, in the present embodiment, the laser cutter 4 is provided with a two-dimensional detection device (such as a two-dimensional laser rangefinder capable of measuring height relative to position in the width direction) at the lead end. In a case in which the steel strip 1 is skewed, the correctness of the edge position detected in the edge position detection process can then be verified based on the detection results of the two-dimensional detection device.

In a case in which misalignment exists between the edge position detected in the edge position detection process and the edge position in the area for laser cutting, the cutting track is translated in the width direction to compensate for the misalignment. In FIG. 6, the cutting track after translation of the initial cutting track including P1, P2 and P3 corresponds to a corrected cutting track including P2'. The oscillation start position of the laser, the oscillation end position of the laser, and the like are again set according to the corrected cutting track. Here, the translated cutting track may be rotated around an axis in the sheet transverse direction or conveyance direction, depending on the shape of the steel strip 1.

Such a correction process is performed by further including the following processes in the cutting track determination process. In other words, in the laser cutting method according to the present embodiment, the cutting track determination process includes a cutting track calculation process of calculating the cutting track based on the edge position from the edge position detection process, a misalignment detection process of detecting misalignment of the edge position, and a cutting track correction process of correcting the cutting track based on the detected misalignment.

As described above, the laser cutting method, the method of producing a steel strip, the laser cutter, and the steel strip production equipment according to the above embodiments can, with the aforementioned configurations and processes, automatically cut the joint 2 between steel strips by automatically determining the cutting start and cutting end positions without human intervention.

While embodiments of the present disclosure have been described with reference to the drawings, it should be noted that various modifications and amendments may easily be implemented by those skilled in the art based on the present disclosure. For example, functions or the like included in each component or the like can be rearranged without logical inconsistency, and a plurality of components or the like can be combined into one or divided. Embodiments according to the present disclosure can also be realized as a program executed by a processor included in an apparatus or as a storage medium having the program recorded thereon. Such embodiments are also to be understood as included in the scope of the present disclosure.

REFERENCE SIGNS LIST

| 1 | Steel strip |
|---|---|
| 1A | Preceding steel strip |
| 1B | Succeeding steel strip |
| 2 | Joint (welded portion) |
| 3 | Robot arm |
| 4 | Laser cutter |
| 10 | Control unit |
| 91 | Edge position detection unit |
| 92 | Cutting track determination unit |
| 93 | Cutting execution unit |

**Claims**

1. A laser cutting method of cutting, using a laser cutter, a vicinity of a joint at which a trailing end of a preceding steel strip is joined to a leading end of a succeeding steel strip, the laser cutting method comprising:

an edge position detection process of detecting an edge position of the preceding steel strip and of the succeeding steel strip;
a cutting track determination process of determining a cutting track based on the edge position; and
a cutting execution process of executing laser cutting along the cutting track, wherein
in the cutting track, an oscillation start position of a laser is set outward from the edge position by a first predetermined distance in a width direction of the steel strip, an oscillation end position of the laser is set outward from the edge position by a second predetermined distance in the width direction of the steel strip, and a penetration angle of the laser is set to a predetermined angle or less.

2. The laser cutting method according to claim 1, wherein the oscillation start position of the laser and the oscillation end position of the laser are set on the cutting track.

3. The laser cutting method according to claim 1 or 2, wherein the cutting track is set to an arc-shape or a triangular shape.

4. The laser cutting method according to claim 3, wherein the cutting track is set to the triangular shape in a case in which a difference in width between the preceding steel strip and the succeeding steel strip exceeds a predetermined width.

5. The laser cutting method according to any one of claims 1 to 4, wherein in a portion of the cutting track in the cutting execution process, tracking control is performed to keep a separation distance between a laser head of the laser cutter and the steel strip constant, and
a start position of the tracking control is set on the cutting track inward from the edge position by a third predetermined distance, and an end position of the tracking control is set on the cutting track inward from the edge position by a fourth predetermined distance.

6. The laser cutting method according to any one of claims 1 to 5, wherein the cutting track determination process comprises

a cutting track calculation process of calculating the cutting track based on the edge position,
a misalignment detection process of detecting misalignment of the edge position, and
a cutting track correction process of correcting the cutting track based on the detected misalignment.

7. A method of producing a steel strip, comprising producing a steel strip by cutting, using a laser cutter, the vicinity of the joint according to the laser cutting method of any one of claims 1 to 6.

8. A laser cutter for cutting a vicinity of a joint at which a trailing end of a preceding steel strip is joined to a leading end of a succeeding steel strip, wherein

the laser cutter is controlled by a control unit comprising an edge position detection unit configured to detect an edge position of the preceding steel strip and of the succeeding steel strip, a cutting track determination unit configured to determine a cutting track based on the edge position, and a cutting execution unit configured to execute laser cutting along the cutting track, and
in the cutting track, an oscillation start position of a laser is set outward from the edge position by a first predetermined distance in a width direction of the steel strip, an oscillation end position of the laser is set outward from the edge position by a second predetermined distance in the width direction of the steel strip, and a penetration angle of the laser is set to a predetermined angle or less.

9. Steel strip production equipment comprising the laser cutter according to claim 8, wherein the steel strip production equipment produces a steel strip by cutting, using the laser cutter, the vicinity of the joint.

FIG. 1

FIG. 2

## FIG. 3

## FIG. 4

# FIG. 5

EP 4 585 357 A1

# FIG. 6

## INTERNATIONAL SEARCH REPORT

| International application No. |
| --- |
| **PCT/JP2023/028626** |

**A.    CLASSIFICATION OF SUBJECT MATTER**

***B23K 26/38***(2014.01)i; ***B21B 15/00***(2006.01)i; ***B23K 26/03***(2006.01)i; ***B23K 26/042***(2014.01)i
FI:    B23K26/38 A; B21B15/00 B; B23K26/042; B23K26/03

According to International Patent Classification (IPC) or to both national classification and IPC

**B.    FIELDS SEARCHED**

Minimum documentation searched (classification system followed by classification symbols)

B23K26/38; B21B15/00; B23K26/03; B23K26/042

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| Y | JP 60-115387 A (MITSUBISHI ELECTRIC CORP) 21 June 1985 (1985-06-21) p. 2, upper right column, line 12 to lower right column, line 11, fig. 7-12 | 1-3, 7-9 |
| A | | 4-6 |
| Y | WO 2014/041588 A1 (O M C CO LTD) 20 March 2014 (2014-03-20) paragraph [0032] | 1-3, 7-9 |
| A | | 4-6 |
| A | JP 2012-508113 A (DANIELI & C. OFFICINE MECCANICHE S.P.A.) 05 April 2012 (2012-04-05) entire text, all drawings | 1-9 |
| A | JP 62-64487 A (KAWASAKI STEEL CORP) 23 March 1987 (1987-03-23) entire text, all drawings | 1-9 |
| A | JP 60-115386 A (MITSUBISHI ELECTRIC CORP) 21 June 1985 (1985-06-21) entire text, all drawings | 1-9 |

☐ Further documents are listed in the continuation of Box C.    ☑ See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| **26 September 2023** | **10 October 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/028626**

| Patent document cited in search report | | | Publication date (day/month/year) | Patent family member(s) | Publication date (day/month/year) |
|---|---|---|---|---|---|
| JP | 60-115387 | A | 21 June 1985 | (Family: none) | |
| WO | 2014/041588 | A1 | 20 March 2014 | (Family: none) | |
| JP | 2012-508113 | A | 05 April 2012 | EP 2355952 B1 entire text, all drawings CN 102209604 A | |
| JP | 62-64487 | A | 23 March 1987 | (Family: none) | |
| JP | 60-115386 | A | 21 June 1985 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05076911 A
- JP 2017080803 A
- JP 2017080806 A